Europäisches Patentamt

European Patent Office

Office européen des brevets

(19)

(11) **EP 1 569 492 A2**

(12) **EUROPEAN PATENT APPLICATION**

(43) Date of publication:
**31.08.2005 Bulletin 2005/35**

(51) Int Cl.⁷: **H04Q 7/38**

(21) Application number: **05004115.1**

(22) Date of filing: **25.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **26.02.2004 KR 2004013141**

(71) Applicant: **SAMSUNG ELECTRONICS CO., LTD.
Gyeonggi-do (KR)**

(72) Inventors:
• **Yu, Hyun-Seok c/o SAMSUNG ELECTRONICS CO.,LTD.
Suwon-si, Gyeonggi-do (KR)**
• **Lee, Hyun-Bae c/o SAMSUNG ELECTRONICS CO.,LTD.
Suwon-si, Gyeonggi-do (KR)**

• **Choi, Gin-Kyu c/o SAMSUNG ELECTRONICS CO.,LTD.
Suwon-si, Gyeonggi-do (KR)**
• **Moon, Yong-Suk c/o SAMSUNG ELECTRONICS CO.,LTD.
Suwon-si, Gyeonggi-do (KR)**
• **Lee, Hye-Jeong c/o SAMSUNG ELECTRONICS CO.,LTD.
Suwon-si, Gyeonggi-do (KR)**
• **Oh, Hyun-Seok c/o SAMSUNG ELECTRONICS CO.,LTD.
Suwon-si, Gyeonggi-do (KR)**

(74) Representative: **Lang, Johannes
Bardehle Pagenberg Dost Altenburg Geissler,
Postfach 86 06 20
81633 München (DE)**

(54) **Method and apparatus for controlling transmission of channel quality information according to characteristics of a time-varying channel in a mobile communication system**

(57)     A method and apparatus for efficiently transmitting channel quality information on a radio channel in a mobile communication system are provided. The reporting cycle of channel quality information is changed adaptively according to time-varying characteristics associated with the Doppler frequency of a radio channel or the variation of the channel quality information. Therefore, the channel quality information is efficiently transmitted. Also, the decrease of unnecessary frequent information transmissions reduces an uplink interference power level and power consumption in user equipment (UE), as well.

FIG.5

**EP 1 569 492 A2**

**Description**

**BACKGROUND OF THE INVENTION**

Field of the Invention

The present invention relates generally to a mobile communication system. In particular, the present invention relates to a method and apparatus for reporting channel quality information necessary to determine modulation, coding rate, and data rate as transmission parameters.

Description of the Related Art

The recent increasing demands for data and multimedia service are not being met by existing communication systems. Hence, along with the trend, the 3$^{rd}$ Generation Partnership Project (3GPP) and 3GPP2 committees are standardizing efficient communication systems for packet data communication. High Speed Downlink Packet Access (HSDPA) has recently been standardized and implemented, wherein data can be transmitted to mobile terminals at high data rates.

HSDPA provides packet transmission service very efficiently using Adaptive Modulation and Coding Scheme (AMC) and Hybrid Automatic Repeat Request (HARQ). Especially, AMC is a scheme for maximizing transmission throughput by controlling modulation, coding rate, and data rate adaptively according to a radio channel quality. To support AMC, information about the radio channel quality must be reported.

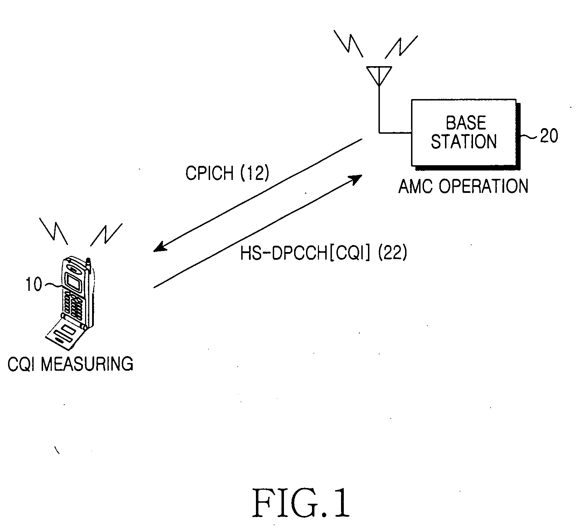

FIG. 1 illustrates an AMC operation in a conventional HSDPA mobile communication system.

Referring to FIG. 1, a User Equipment (UE) 10 measures the Signal-to-Interference power Ratio (SIR) of a Common Pilot Channel (CPICH) received from a base station 20 as a reference signal, and determines a Channel Quality Indicator (CQI) according to the measurement, to thereby maximize the whole transmission throughput. In a 3GPP system called Wideband Code Division Multiple Access (WCDMA), the CQI is sent on a High Speed-Dedicated Physical Control Channel (HS-DPCCH) 22 related to a High Speed-Dedicated Shared Channel (HS-DSCH).

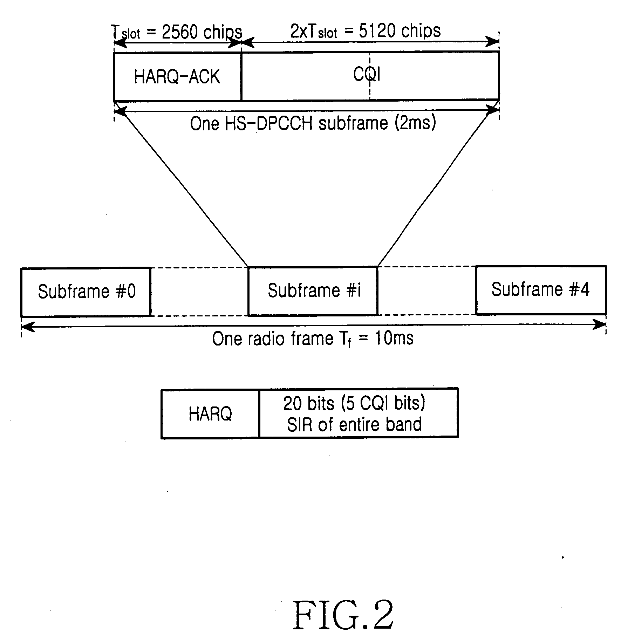

FIG. 2 illustrates a CQI reporting format in the WCDMA communication system. Referring to FIG. 2, the CQI is sent in one HS_DPCCH subframe of 2ms. The HS-DPCCH subframe includes a HARQ Acknowledgement (ACK) in a 2560-chip time slot and the CQI in two time slots of 5120 chips. One radio frame has 5 subframes and thus it is 10ms in duration.

The number of actual bits transmitted is 20 bits. Five bits among the 20 bits represent information, and the remaining 15 bits are used for redundancy information produced from channel encoding. The 5-bit information represents 31 CQI values according to a UE category. According to the CQI, the base station selects Quadrature Phase Shift Keying (QPSK) or 16 Quadrature Amplitude Modulation (QAM) as a modulation scheme and determines an appropriate data rate, that is, an appropriate transport block size for the UE.

The CQI is determined by the SIR over the entire frequency band. It is sent to the base station according to transmission parameters including a predetermined reporting cycle and time offset. Let the reporting cycle be denoted by k and the time offset be denoted by 1. Then, k and l are called CQI transmission parameters and the Node B notifies the UE of k and l by higher-layer signaling.

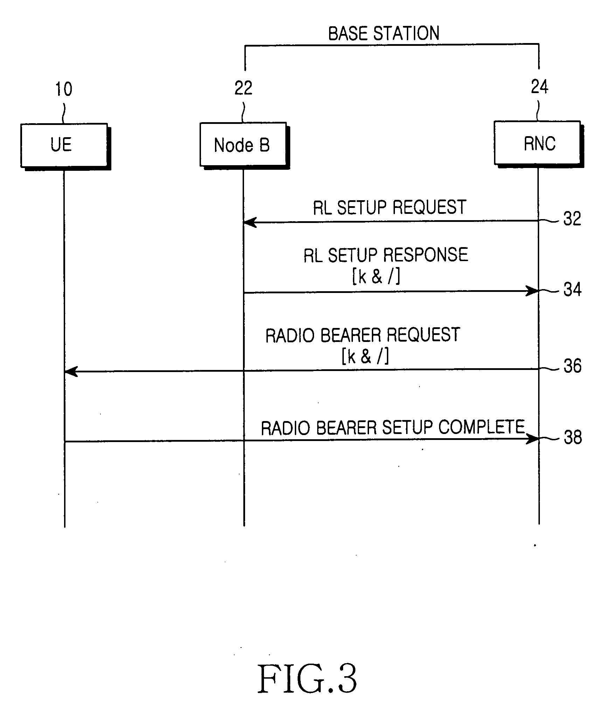

FIG. 3 is a diagram illustrating a message flow for transmitting CQI transmission parameters in a radio link (RL) setup procedure in the conventional HSDPA system. The base station is illustrated separately as a Node B 22 for actually establishing an RL with a UE 10 and a Radio Network Controller (RNC) 24 for controlling the RL connection.

Referring to FIG. 3, upon receipt of an RL SETUP REQUEST message for the UE 10 from the RNC 24 in step 32, the Node B 22 transmits to the RNC 24 an RL SETUP RESPONSE message including k and l in step 34. In step 36, the RNC 24 transmits a RADIO BEARER REQUEST message including k and l to the UE 10. The UE 10 transmits a RADIO BEARER SETUP COMPLETE message to the RNC 24, thereby completing the setup of the RL in step 38.

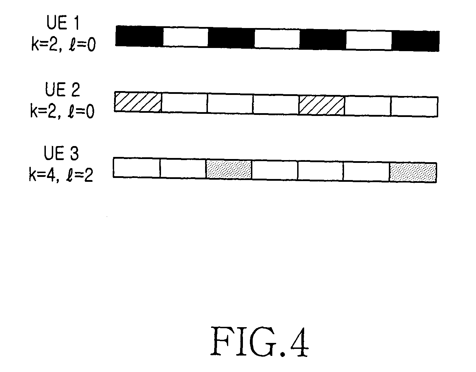

FIG. 4 illustrates a CQI transmission on the HS-DPCCH in the HSDPA system. In the illustrated case, three UEs transmit CQIs to one Node B.

Referring to FIG. 4, UE 1 transmits a CQI in a first, third, fifth and seventh time slots with k=2 and 1=0. UE 2 transmits a CQI in the first and fifth time slots with k=4 and 1=0. UE 3 transmits a CQI in the third and seventh time slots with k=4 and 1=2.

In the conventional HSDPA system, the Node B usually determines k depending on whether the UE is in a handover situation. The UE then reports a CQI at a time when (5xCFN+[(nx256chips+ix2560chips)/7680chips]) mod k is 0 and i mod 3 is 0. Here, n is a timing offset and i is a slot count. Because one frame comprises 15 time slots, i ranges from 0 to 14. Connection Frame Number (CFN) is a frame count and incremented by 1 each time i reaches 14. [(nx256chips+ix2560chips)/7680chips] increments by 1 each time i increments by 3 and by 5 each time i increments by 15. Considering that one frame has 15 slots in the WCDMA system, the CFN is incremented by 1 at the end of each frame. Consequently, the CQI reporting is performed in at once (multiple of 3)$^{th}$ and (multiple of k)$^{th}$ slots. Therefore, the CQI is sent on the uplink every 3k slots, that is, every k subframes. The CQI is repeated as many times as N_cqi_transmit. The repetition factor is also indicated to the UE by higher-layer signaling.

As described above, the time to report the CQI on the uplink is determined by k. However, the conventional system gives no consideration to channel condition in determining k. In practice, each UE moves at a different speed with a different Doppler frequency. Therefore, it is not efficient to report the CQI at the same cycle in each UE. A slow-moving UE can transmit the CQI within a coherence time even at a long reporting cycle, whereas a fast-moving UE needs a shorter reporting cycle.

The CQI reporting cycle must be determined efficiently for the following reasons.

1. Interference always exists between uplink signals from UEs. Since uplink transmission on the HS-DPCCH is performed in a Discontinuous Transmission (DTX) mode, as infrequent data transmission as possible reduces interference power, which is favorable to accurate reception in the Node B. Therefore, it is efficient to set a long reporting cycle in terms of reception in the Node B.

2. Continuous uplink transmission amounts to great power consumption in a UE. The increase of power consumption rapidly decreases the life of the battery. Therefore, a long reporting cycle is efficient in terms of power consumption in the UE.

3. The Node B makes a resource map based on CQIs received from a plurality of UEs and allocates appropriate resources to them through scheduling. The CQI information must be reliable for appropriate resource allocation, which is equivalent to minimization of CQI transmission delay. Since the delay minimization requires frequency CQUI reporting, it is efficient to set a short reporting cycle in terms of resource management in the Node B.

## SUMMARY OF THE INVENTION

An object of the present invention is to substantially solve at least the above problems and/or disadvantages and to provide at least the advantages below. Accordingly, an object of the present invention is to provide a method and apparatus for determining a Channel Quality Indicator (CQI) reporting cycle efficient for both a Node B and a user equipment (UE) in a high-speed mobile communication system.

Another object of the present invention is to provide a method and apparatus for controlling the cycle of reporting a CQI from a UE to a Node B according to channel conditions.

The above objects are achieved by providing a method and apparatus for efficiently transmitting channel quality information on a radio channel in a mobile communication system.

According to one aspect of the present invention, in an apparatus and method of reporting channel quality information in a mobile communication system, mobility information of a mobile station is received from the mobile station, a reporting cycle of channel quality information is determined based on the mobility information, and the channel quality information is acquired from the mobile station at the reporting cycle.

According to another aspect of the present invention, in an apparatus and method of reporting channel quality information in a mobile communication system, a variation in channel quality information received from a mobile station is estimated, a reporting cycle of the channel quality information is determined based on the variation, and the channel quality information is acquired from the mobile station at the reporting cycle.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates an Adaptive Modulation and Coding Scheme (AMC) operation in a conventional mobile communication system;

FIG. 2 illustrates a Channel Quality Indicator (CQI) reporting format in a conventional Wideband Code Division Multiple Access (WCDMA) communication system;

FIG. 3 is a diagram illustrating a message flow for transmitting CQI transmission parameters in a radio link (RL) setup procedure in the conventional mobile communication system;

FIG. 4 illustrates a CQI transmission on the High Speed-Dedicated Physical Control Channel (HS-DPCCH) in the conventional mobile communication system;

FIG. 5 is a block diagram illustrating the configuration of a system for determining a CQI according to an embodiment of the present invention;

FIG. 6 is a flowchart illustrating the operation of a Node B according to the embodiment of the present invention;

FIG. 7 is a block diagram illustrating the configuration of a system for determining a CQI according to another embodiment of the present invention;

FIG. 8 is a block diagram of a CQI variance measurer according to the second embodiment of the present invention;

FIG. 9 is a flowchart illustrating the operation of the Node B according to the second embodiment of the present invention; and

FIG. 10 illustrates an example of CQI transmission on the HS-DPCCH according to the embodiments of the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The embodiments of the present invention are intended to control a Channel Quality Indicator (CQI) reporting cycle appropriate for both a Node B and a user equipment (UE). According to channel conditions, a long reporting cycle does not matter for some UEs, and a short reporting cycle is required for other UEs. Therefore, the CQI reporting cycle must be determined such that there are no problems with scheduling on behalf of the Node B, interference power is reduced, and battery consumption in UEs is reduced.

Two embodiments regarding CQI reporting cycle determination are provided herein. In one of the embodiments, a UE transmits information concerning its movements and a Node B determines a CQI reporting cycle according to the UE's movements. In the other embodiment, the Node B monitors the change in a CQI and determines the CQI reporting cycle adaptively according to the CQI change. Common to both the embodiments, once the CQI reporting cycle is determined, a time offset is determined so as to minimize uplink interference.

First Embodiment

The UE estimates its Doppler frequency and speed as its mobility information and reports the mobility information to the Node B. The Node B then determines an appropriate CQI reporting cycle and time offset according to the mobility information.

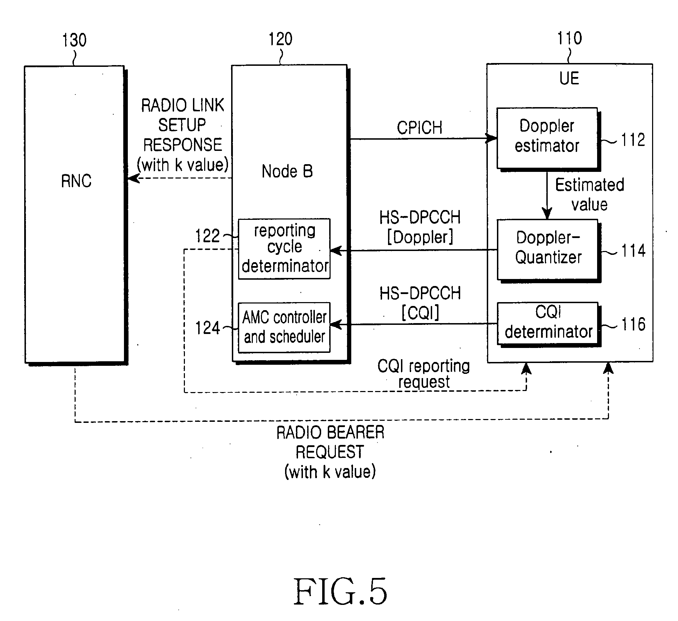

FIG. 5 is a block diagram illustrating the configuration of a system for determining a CQI according to an embodiment of the present invention.

Referring to FIG. 5, a UE 110 roughly estimates its mobility information, quantizes it, and transmits the quantized value on the uplink. To do so, the UE 110 has a Doppler estimator 112 for estimating Doppler information from a signal received from a Node B 120, for example a Common Pilot Channel (CPICH), and a Doppler quantizer 114 for quantizing the Doppler estimation value at an appropriate quantization interval. The quantized value is transmitted to the Node B 120 on a High Speed-Dedicated Physical Control Channel (HS-DPCCH).

A reporting cycle determinator 122 in the Node B 120 determines a CQI reporting cycle k for the UE 110 based on the quantized value and determines a time offset 1 according to k. Final determination of the reporting cycle will be described later in more detail.

In an embodiment of the present invention, the Node B 120 can report k and 1 to a Radio Network Controller (RNC) 130 by a radio link (RL) SETUP RESPONSE message. The RNC 130 then notifies a CQI determinator 116 of the UE 110 of k and l by a RADIO BEARER REQUEST message. The CQI determinator 116 transmits a CQI on a HS-DPCCH at a time determined by k and l.

It can be further contemplated as another embodiment of the present invention that the Node B 120 manages k and l without reporting them to the RNC 130 and requests the UE 110 to report the CQI at a corresponding time point. The CQI determinator 116 of the UE 110 transmits the CQI on the HS-DPCCH in response to the request. In this case, a High Speed-Dedicated Shared Channel (HS-DSCH) scheduling delay can be minimized, obviating the need for additional downlink signaling.

An Adaptive Modulation and Coding Scheme (AMC) controller and scheduler 124 in the Node B 120 schedules data transmission for all UEs and performs an AMC function based on CQIs from the UEs including the UE 110.

To transmit Doppler information to the Node B 120 on the uplink, the Doppler estimator 112 of the UE 110 estimates the Doppler frequency or speed of the UE 110 using a signal received from the Node B 120. An algorithm for the estimation is known and the estimation is made using the covariance function of a channel by way of an example.

As known, the power characteristics of a channel can determined using the CPICH. The power auto-covariance function of the channel is expressed as

$$Cov_C[i](n) = E[C(n)C(n+i)]-E[C(n)]^2 \qquad (1)$$

where $Cov_c[i](n)$ is the power auto-covariance function of an $i^{th}$ slot, $C[n]$ is an $n^{th}$ sample of a channel power response, and $E[\ ]$ is energy.

The UE 110 calculates the value of i, that is, $i_0$ at which the covariance function of Eq. (1) has a maximum value. The UE 110 then estimates a Doppler frequency $W_{Doppler}$ by substituting $i_0$ into

$$\omega_{Do_{ppler}} = \frac{3,8317}{T_b i_0} \qquad (2)$$

In general, a carrier frequency in which communications are conducted has already been set and the Doppler frequency can be expressed in terms of a UE's speed. Also, the relationship between coherence time and speed can be acquired through actual measurement. Thus, the coherence time of the channel of the UE is quantized by means of a mapping table such as Table 1 below. The coherence time refers to the time over which channel characteristics are relatively coherent.

Table 1

| Order of output | 0000 | 0001 | 0010 | 0011 | 0100 | 0101 | 0110 | 0111 | 1000 |
|---|---|---|---|---|---|---|---|---|---|
| Speed (Km/hr) | 1.0 | 1.5 | 3 | 6 | 12 | 15 | 30 | 60 | 120 |
| Coherence time (ms) | 200 | 160 | 80 | 40 | 20 | 16 | 8 | 4 | 2 |

The UE 110 transmits the value quantized by Table 1 to the reporting cycle determinator 122.

The quantized value is delivered on the HS-DPCCH. Specifically, the UE 110 transmits a 4-bit quantized coherence time value instead of a 5-bit CQI in the first HS-DPCCH frame.

The reporting cycle determinator 122 determines the speed of the UE 110 from the quantized coherence time referring to the same mapping table as used in the UE 110, Table 1.

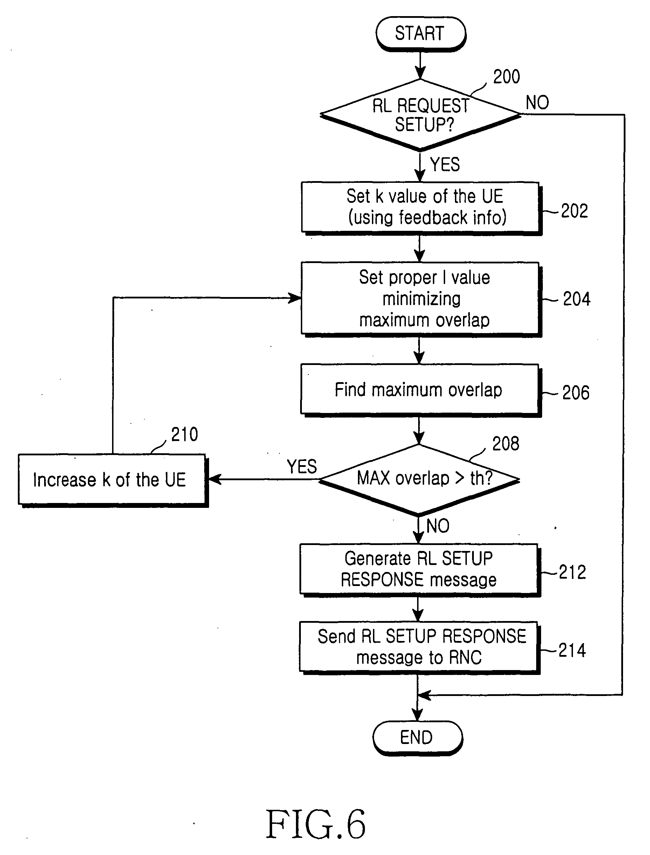

FIG. 6 is a flowchart illustrating the operation of a Node B according to the embodiment of the present invention. When the UE establishes a new RL, the procedure illustrated in FIG. 6 is performed.

Referring to FIG. 6, the Node B determines whether an RL setup has been requested from the RNC or UE in step 200. Upon request for the RL setup, the Node B determines k using feedback information from the UE, that is, a coherence time value in step 202.

For example, if the Node B receives "0101" on the HS=DPCCH from the UE, it determines k to be 8 considering that 2ms is taken to transmit one CQI, because "0101" represents a coherence time of 16ms in Table 1.

In step 204, a proper l value that minimizes a maximum overlap between the UE and other UEs is determined based on k. Specifically, the Node B selects a proper l that minimizes the maximum overlap between CQI time slots for the UE and CQI time slots for other UEs, while changing l from 0 to k-1. It is possible since k and l values of other UEs which have already established RL are known.

The Node B again determines the maximum CQI transmission overlap between the UE and other UEs according to k and 1 in step 206. The overlap can be defined as the number of other UEs that transmit CQIs in time slots set for the UE to transmit a CQI according to k and 1. If the maximum overlap exceeds a predetermined threshold th in step 208, the Node B increases k by one level in step 210 and returns to step 204. Available k values are preset: 0, 2, 4, 8, 10, 20, 40, 80, 100. Therefore, if k is set to 8 in step 202, k is increased to 10 in step 210.

Once k and l have been determined in the above procedure, the Node B generates an RL SETUP RESPONSE message including k and l in step 212 and transmits the RL SETUP RESPONSE message to the RNC in step 214. The RNC then notifies the UE of k and l and the UE reports a CQI to the Node B in time slots determined by k and l.

While k and l are indicated to the UE in the illustrated case of FIG. 6, it can be further contemplated as another embodiment of the present invention that the Node B requests the UE to report the CQI in time slots by the determined k and l. The CQI report request is sent to the UE in a Channelization Code Set (CCS) field in an High Speed-Shared Control Channel (HS-SCCH). The UE transmits the CQI on the HS-DPCCH immediately after receiving the CQI report request from the Node B. The CCS field is used to indicate the number and type of spreading codes.

Second Embodiment

The Node B determines k and l according to the variation of a CQI, while continuously receiving the CQI from the UE.

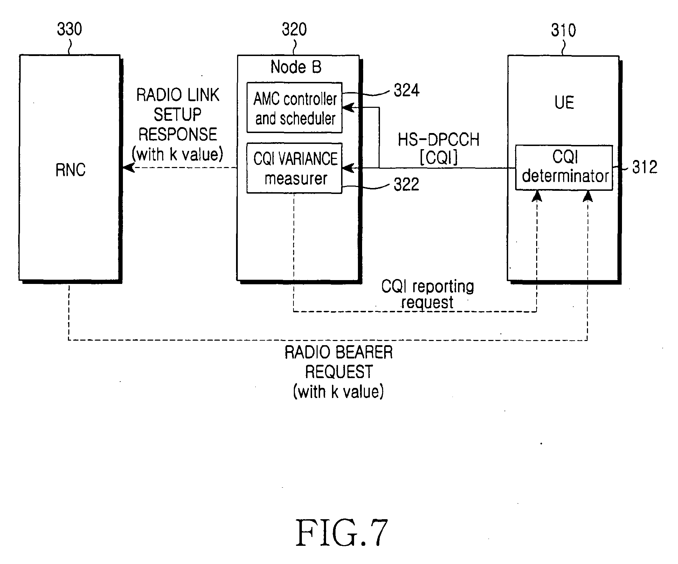

FIG. 7 is a block diagram illustrating the configuration of a system for determining a CQI according to another embodiment of the present invention. Referring to FIG. 7, a UE 310 periodically reports a CQI on a HS-DPCCH to a Node B 320. The Node B 320 estimates the variance or standard deviation of the CQI and determines k and l according to the CQI variance or standard deviation.

A CQI determinator 312 in the UE 310 transmits the CQI on the HS-DPCCH according to initial k and l values to a RNC 330. A CQI covariance measurer 322 in the Node B 320 calculates the variance or standard deviation of CQI values accumulated for a predetermined time period and roughly estimates the variation of the CQI over time. The CQI covariance measurer 322 determines a CQI reporting cycle based on the measurement using a predetermined mapping function.

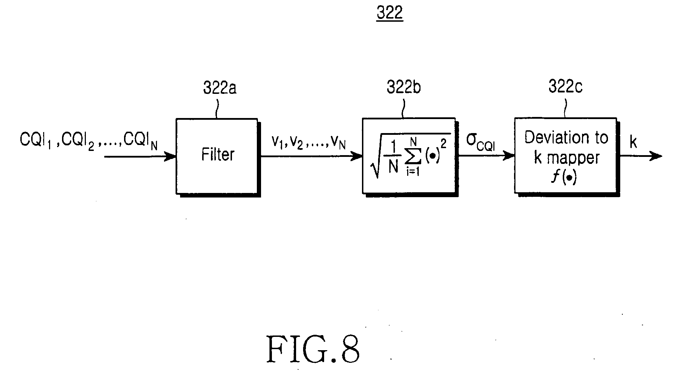

FIG. 8 is a block diagram of the CQI variance measurer according to the second embodiment of the present invention. Referring to FIG. 8, the CQI variance measurer 322 includes an input filter 322a, a mean square average calculator 322b, and a mapper 322c. To compute a square root, the mean square average calculator 322b is replaced by a standard variance generator.

The input filter 322a receives CQI values from the UE, $CQI_1$, $CQI_2$, ..., $CQI_N$. It is configured to be a low pass filter such as a moving average (MA) filter or a median filter in order to detect the variation of the CQI even if there is little change in the channel condition. The mean square average calculator 322b obtains a CQI standard deviation $\sigma_{CQI}$ by squaring outputs of the filter 322a, $v_1$, $v_2$, ..., $v_N$, summing the squares, and computing the average of the sum.

The mapper 322c maps $\sigma_{CQI}$ to k. For example, the mapper 322c determines k by

$$k(\sigma) = \begin{cases} 0, & \sigma \geq \eta_0 \\ 2, & \eta_1 \leq \sigma < \eta_0 \\ 4, & \eta_2 \leq \sigma < \eta_1 \\ \dots \\ 100, & \sigma < \eta_6 \end{cases}$$

$$\dots\dots(3)$$

where $\eta_0$ to $\eta_6$, the number of $\eta_0$ to $\eta_6$, and available k values are preset depending on external factors such as system configuration and radio environment. The mapper 322c also determines a proper l according to k.

In an embodiment of the present invention, the Node B 120 can report k and 1 to the RNC 330 by an RL SETUP RESPONSE message. The RNC 330 then notifies a CQI determinator 312 of the UE 310 of k and 1 by a RADIO BEARER REQUEST message. The CQI determinator 312 transmits a CQI at a time determined by k and 1.

It can be further contemplated as another embodiment of the present invention that the CQI variance measurer 322 of the Node B 320 directly requests the CQI determinator 312 of the UE 310 to report the CQI at a corresponding time point. The CQI determinator transmits the CQI in response to the request.

An AMC controller and scheduler 324 of the Node B 320 schedules data transmission for all UEs based on CQIs received from the UEs including the UE 310 and performs an AMC function.

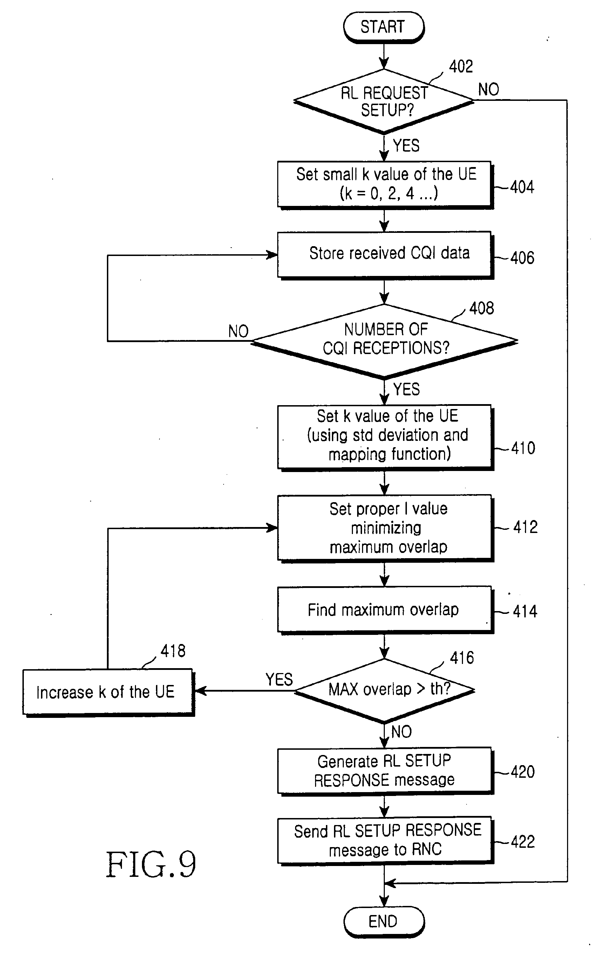

FIG. 9 is a flowchart illustrating the operation of the Node B according to the second embodiment of the present invention.

Referring to FIG. 9, the Node B determines whether an RL setup has been requested from the RNC or UE in step 402. Upon request for the RL setup, the Node B sets k to a small value such as 0, 2, or 4 in step 404. The Node B also sets l according to k. Upon receipt of CQIs from the UE according to k and l, the Node B stores the CQIs in step 406. The Node B determines whether the number of CQI reception occurrences is equal to or larger than N in step 408. If the number of CQI reception occurrences is less than N, the Node B returns to step 406. If the number of CQI reception occurrences is equal to or lager than N, the Node B goes to step 410.

In step 410, the Node B calculates the variance or standard deviation of the stored CQI values and determines k according to the variance or standard deviation using Eq. (3). The Node B determines a proper 1 value that minimizes a maximum overlap between the UE and other UEs based on k in step 412. Specifically, the Node B selects a proper 1 that minimizes the maximum overlap between CQI time slots for the UE and CQI time slots for other UEs, while changing l from 0 to k-1, which is made possible since k and l values of other UEs which have established RLs are known.

The Node B again determines the maximum CQI transmission overlap between the UE and other UEs according to k and l in step 414. The overlap can be defined as the number of other UEs that transmit CQIs in time slots set for the UE to transmit a CQI according to k and l. If the maximum overlap exceeds a predetermined threshold th in step 416, the Node B increases k by one level in step 418 and returns to step 412. Available k values are preset: 0, 2, 4, 8, 10, 20, 40, 80, 100. Therefore, if k is set to 8 in step 410, k is increased to 10 in step 418.

Once k and l have been determined in the above procedure, the Node B generates an RL SETUP RESPONSE message including k and l in step 420 and transmits the RL SETUP RESPONSE message to the RNC in step 422. The RNC then notifies the UE of k and l and the UE reports a CQI to the Node B in time slots determined by k and 1.

While k and l are indicated to the UE in the illustrated case of FIG. 9, it can be further contemplated as another embodiment of the present invention that the Node B requests the UE to report the CQI in time slots determined by k and 1. The UE transmits the CQI on the HS-DPCCH immediately after receiving the CQI report request from the Node B.

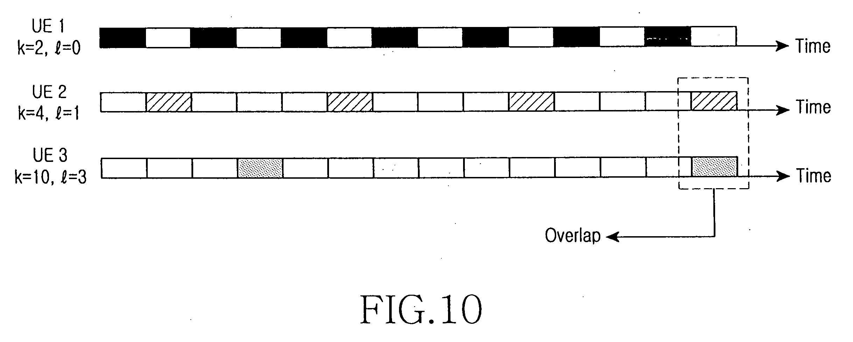

FIG. 10 illustrates an example of CQI transmission on the HS-DPCCH according to the embodiments of the present invention. UE 1 and UE 2 are moving fast, whereas UE 3 is moving slow in the illustrated case.

Referring to FIG. 10, UE 1 transmits a CQI in first, third, fifth and seventh time slots with k=2 and 1=0. UE 2 transmits a CQI in second, sixth, tenth, and fourteenth time slots with k=4 and l=1. UE 3 transmits a CQI in fourth and fourteenth time slots with k=10 and 1=2.

UE 3, which is moving slow, reports the CQI at a longer interval than UE 1 and UE 2, while UE 1 and UE 2 report their CQIs more frequently. This is because a radio channel environment can be fast changed for a fast-moving UE and the Node B needs to sense the change fast. Furthermore, transmissions of the CQIs from UEs are distributed by 1 to avoid simultaneous CQI transmissions in the same time slot as much as possible. Thus, power interference caused by overlapped CQI transmissions among UEs can be minimized.

In accordance with the present invention as described above, system performance is increased, power for CQI reporting in UEs is saved, and power interference is minimized in an HSDPA communication system where channel quality information is reported for implementation of AMC.

While the invention has been shown and described with reference to certain preferred embodiments thereof, it should be understood by those skilled in the art that various changes in form and details may be made therein without departing from the spirit and scope of the invention as defined by the appended claims.

**Claims**

1. A method of reporting channel quality information in a mobile communication system, comprising the steps of:

   receiving mobility information of a mobile station from the mobile station;
   determining a reporting cycle of channel quality information based on the mobility information; and
   acquiring the channel quality information from the mobile station at the reporting cycle.

2. The method of claim 1, wherein the mobility information is a quantized value of a Doppler frequency or speed of the mobile station.

3. The method of claim 1, wherein the determining step comprises the step of selecting one of available reporting cycle values in correspondence with the mobility information.

4. The method of claim 1, further comprising the step of determining a time offset for reporting the channel quality information according to the determined reporting cycle, the time offset minimizing a maximum overlap of channel quality information transmissions between the mobile station and other mobile stations.

5. The method of claim 1, further comprising the step of providing the determined reporting cycle to the mobile station to allow the mobile station to periodically transmit the channel quality information at the reporting cycle.

6. The method of claim 1, further comprising the step of requesting the mobile station to report the channel quality information at time points corresponding to the determined reporting cycle.

7. A mobile communication system comprising:

   a mobile station for transmitting channel quality information; and
   a base station for receiving the quality information,

   wherein the mobile station includes an estimator for estimating mobility information from a signal received from the base station, and a channel quality indicator (CQI) determinator for reporting the channel quality information to the base station, and the base station includes a reporting cycle determinator for determining a reporting cycle of the channel quality information based on the mobility information, and a controller and scheduler for acquiring the channel quality information from the mobile station at the reporting cycle.

8. The mobile communication system of claim 7, wherein the mobility information is a quantized value of a Doppler frequency or speed of the mobile station.

9. The mobile communication system of claim 7, wherein the reporting cycle determinator determines a time offset for reporting the channel quality information according to the determined reporting cycle, the time offset minimizing a maximum overlap of channel quality information transmissions between the mobile station and other mobile stations.

10. The mobile communication system of claim 7, wherein the reporting cycle determinator provides the determined reporting cycle to the mobile station to allow the mobile station to periodically transmit the channel quality information at the reporting cycle.

11. The mobile communication system of claim 7, wherein the reporting cycle determinator requests the mobile station to report the channel quality information at time points corresponding to the determined reporting cycle.

12. A method of reporting channel quality information in a mobile communication system, comprising the steps of:

   estimating a variation in channel quality information received from a mobile station;
   determining a reporting cycle of the channel quality information based on the variation; and
   acquiring the channel quality information from the mobile station at the reporting cycle.

13. The method of claim 12, wherein the variation is the variance or standard deviation of channel quality indicators (CQIs) representing the channel quality information.

14. The method of claim 12, wherein the determining step comprises the step of selecting one of available reporting cycle values in correspondence with the variation.

15. The method of claim 12, further comprising the step of determining a time offset for reporting the channel quality information according to the determined reporting cycle, the time offset minimizing a maximum overlap of channel quality information transmissions between the mobile station and other mobile stations.

16. The method of claim 12, further comprising the step of providing the determined reporting cycle to the mobile station to allow the mobile station to periodically transmit the channel quality information at the reporting cycle.

17. The method of claim 12, further comprising the step of requesting the mobile station to report the channel quality information at time points corresponding to the determined reporting cycle.

18. A mobile communication system comprising:

   a mobile station for transmitting channel quality information; and
   a base station for receiving the quality information,

   wherein the mobile station includes a channel quality indicator(CQI) determinator for generating the channel quality information from a signal received from the base station and reporting the channel quality information to the base station, and the base station includes a reporting cycle determinator for estimating a variation in the channel quality information received from the mobile station and determining a reporting cycle of the channel quality information based on the variation, and a controller and scheduler for acquiring the channel quality information from the mobile station at the reporting cycle.

19. The mobile communication system of claim 18, wherein the variation is the variance or standard deviation of CQIs representing the channel quality information.

20. The mobile communication system of claim 18, wherein the reporting cycle determinator determines a time offset for reporting the channel quality information according to the determined reporting cycle, the time offset minimizing a maximum overlap of channel quality information transmissions between the mobile station and other mobile stations.

21. The mobile communication system of claim 18, wherein the reporting cycle determinator provides the determined reporting cycle to the mobile station to allow the mobile station to periodically transmit the channel quality information at the reporting cycle.

22. The mobile communication system of claim 18, wherein the reporting cycle determinator requests the mobile station to report the channel quality information at time points corresponding to the determined reporting cycle.

CPICH (12)

BASE
STATION ~20

AMC OPERATION

HS-DPCCH[CQI] (22)

10~

CQI MEASURING

FIG.1

FIG.2

BASE STATION

10                    22                    24

UE          Node B          RNC

RL SETUP REQUEST ⌐ 32

RL SETUP RESPONSE
[k & /] ⌐ 34

RADIO BEARER REQUEST
[k & /] ⌐ 36

RADIO BEARER SETUP COMPLETE ⌐ 38

# FIG.3

UE 1
k=2, ℓ=0

UE 2
k=2, ℓ=0

UE 3
k=4, ℓ=2

# FIG.4

130
120
110

RNC

RADIO LINK
SETUP
RESPONSE
(with k value)

Node B

UE

CPICH → Doppler
estimator ~112

Estimated
value

122~ reporting
cycle
determinator

HS-DPCCH
[Doppler]

Doppler-
Quantizer ~114

124~ AMC controller
and scheduler

HS-DPCCH
[CQI]

CQI
determinator ~116

CQI reporting
request

RADIO BEARER
REQUEST
(with k value)

FIG.5

START

RL REQUEST
SETUP? 200 — NO

YES

Set k value of the UE
(using feedback info) — 202

Set proper I value
minimizing
maximum overlap — 204

Find maximum overlap — 206

208

Increase k of the UE 210 ← YES — MAX overlap > th?

NO

Generate RL SETUP
RESPONSE message — 212

Send RL SETUP RESPONSE
message to RNC — 214

END

FIG.6

FIG.7

322

322a

$CQI_1, CQI_2, ...., CQI_N$ → Filter → $v_1, v_2, ...., v_N$

322b

$\sqrt{\dfrac{1}{N}\sum_{i=1}^{N}(\bullet)^2}$ → $\sigma_{CQI}$

322c

Deviation to k mapper $f(\bullet)$ → k

FIG.8

START

402
RL REQUEST
SETUP? — NO

↓ YES

Set small k value of the UE
(k = 0, 2, 4 ...) — 404

Store received CQI data — 406

408
NUMBER OF
CQI RECEPTIONS? — NO

↓ YES

Set k value of the UE
(using std deviation and
mapping function) — 410

Set proper I value
minimizing
maximum overlap — 412

Find maximum overlap — 414

418
Increase k of the UE — YES ← 416
MAX overlap > th?

↓ NO

Generate RL SETUP
RESPONSE message — 420

Send RL SETUP RESPONSE
message to RNC — 422

FIG.9

END

FIG.10